**Europäisches Patentamt**

**European Patent Office**

**Office européen des brevets**

(11) Publication number: **0 183 036**
**A2**

# (12) EUROPEAN PATENT APPLICATION

(21) Application number: **85113121.9**

(22) Date of filing: **16.10.85**

(51) Int. Cl.⁴: **F 16 D 69/02**

---

(30) Priority: **26.11.84 GB 8429768**

(43) Date of publication of application:
**04.06.86 Bulletin 86/23**

(84) Designated Contracting States:
**BE DE FR GB IT NL SE**

(71) Applicant: **H.I.P. Limited**
**Carlisle Close Sheffield Road Sheepbridge**
**Chesterfield, S41 9ED(GB)**

(71) Applicant: **Plasma Coatings Limited**
**5 Meverill Road Tideswell**
**Derbyshire, SK17 8PY(GB)**

(72) Inventor: **Anderson, Duncan Maxwell**
**12 Bents Drive Ecclesall**
**Sheffield, S11 9RP(GB)**

(72) Inventor: **Rickinson, Bernard Alan**
**The Gabled House South Church Street**
**Bakewell Derbyshire(GB)**

(74) Representative: **Jack, Bruce James et al,**
**FORRESTER & BOEHMERT Widenmayerstrasse 4/I**
**D-8000 Munchen 22(DE)**

---

(54) **Brakes, for example, for vehicles.**

(57) A friction brake element, such as a friction brake disc, comprises a light alloy substrate having a working face overlayed by a wear resistant layer containing silicon carbide dispersed in a matrix of, e.g., copper diffusion bonded to the substrate. The layer may conveniently be diffusion bonded to the substrate and also densified by the use of hot isostatic pressing techniques.

EP 0 183 036 A2

Croydon Printing Company Ltd.

characterised by having a working face overlayed by a layer containing silicon carbide dispersed in a matrix of a metal of suitable melting point and thermal expansion coefficient diffusion bonded to the substrate.

The preferred matrix metals are copper and copper-base alloys since these have the appropriate melting point and thermal expansion coefficient, are capable of diffusion bonding to light alloys and have the additional advantage of high thermal conductivity to promote flow of heat into the substrate without the generation of excessive thermal gradients in the coating layer.

In preferred embodiments of the invention the layer containing silicon carbide is applied as an overcoat on a primer coat of the matrix metal or of an alloy of the matrix metal, the primer coat being diffusion bonded both to the substrate and to the matrix of the overcoat. A cupronickel alloy is a preferred primer coat material.

Thus in another and more limited aspect the invention provides a friction brake element such as a brake disc comprising a light alloy substrate carrying at least on its working face(s) a cupronickel primer coat and an overcoat consisting of silicon carbide particles dispersed in a copper matrix, the primer coat being diffusion bonded both to the substrate and to the overcoat.

Diffusion bonding of the layer or layers to the substrate and/or to one another is conveniently effected by the application of suitable pressure at an appropriate temperature and conveniently by the application of isostatic fluid pressure directly or indirectly to the coated substrate. Such a procedure not only effects the required diffusion bond but also densifies the layer or layers of coating to improve the structural integrity and uniformity thereof.

Thus in a further aspect the invention provides a method of fabricating a friction brake element such as a brake disc, characterised by applying to a light alloy substrate at least on the working face(s) thereof a layer containing silicon carbide particles dispersed in a matrix metal of suitable melting point and thermal expansion coefficient, and effecting both diffusion bonding of such layer to the substrate and densification of such layer by the application of pressure.

Desirably the layer or layers are applied to the substrate by spraying techniques such as flame spraying and plasma spraying. Most desirably such a technique is applied in a manner that leads to the or each coating layer having limited surface-communicating subsurface porosity, so as to permit compaction by directly applied isostatic fluid pressure. This enables the substrate having the applied layer or layers to be subjected directly to hot isostatic pressing to accomplish diffusion bonding of the layer or layers to the substrate and/or to one another and compaction of the layer or layers to achieve densification thereof and elimination of residual porosity.

When, as is preferred, hot isostatic pressing is the technique employed to accomplish the said diffusion bonding, the procedure may be so organised as to constitute part of any heat treatment that the substrate may require to develop desired physical properties.

Thus, for instance, the temperature and duration chosen for the hot isostatic pressing operation may be selected having regard to a soaking requirement of the heat treatment of the substrate, the pressing operation being terminated with a controlled cooling of the element so that thereafter it is only necessary to conduct an aging treatment to develop required physical properties in the light alloy substrate.

The method of the invention has been applied experimentally to the production of a brake disc of HI5 aluminium alloy suitable for use in an unventilated, inboard, rear brake installation of a high-performance go-kart and the following description of the production of such an experimental brake disc illustrates the invention.

In fabricating such a brake disc, a disc of HI5 alloy was first degreased, using conventional condensing solvent vapour equipment or a solvent such as "Genklene N". Thereafter the working surfaces of the disc were grit blasted using G47-55 chilled iron particles in an airstream motivated by a pressure of 140 kPa (20psig). Surface dust was then removed by blasting with dry air or inert gas.

A primer coat of 62/38 copper/nickel alloy was then applied to the working surfaces by spraying to deposit a layer having a thickness in the range 0.25 - 0.30mm (0.010 - 0.012 inches). A high-velocity spraying system was used in order to deposit a coating layer having minimal surface-connected porosity. A suitable high-velocity spraying system for this primer coat may use either a powder feed with a spray gun such as a Metco 7M or 3M, or it may use a wire feed with an appropriate spray gun such as a Metco 10E or 12E. The spraying system may be of the inert gas plasma spraying type or of the high-velocity fuel burning flame spraying type, either of which are capable of depositing a coating that has a laminar structure as a consequence of deformation and overlapping of the sprayed particles.

In one experiment the primer coat was applied by plasma spraying cupronickel powder of the required composition, using a Metco 7M spray gun fitted with a two-port GH nozzle and meter wheel S. The cupronickel powder was fed at the rate of about 2.7 kg/hr. The arc current was 500 amps at a voltage in the range 60-70 V. Both the arc gas and the powder carrier gas were argon while the secondary gas was hydrogen. The flow control settings (per their calibrations) were: arc gas 80; secondary gas 15; powder carrier gas 37. The spraying distance was 64mm.

In another experiment the primer coat was applied by high-velocity flame spraying of cupronickel wire, using a Metco 10E spray gun fitted with a 10E-7A 3mm (1/8") nozzle and EC air cap and standard wire feed gears. The cupronickel wire was fed at a rate of 10.4 kg/hr: air, oxygen and acetylene were supplied at pressures of 380, 205, and 105 kPa with flow control settings (per their calibrations) of: air 51; oxygen 44; acetylene 40. The spray distance was 125mm and the "burn-off" position was set at 3mm in front of the air cap.

In each case the primer coat was then covered by an overcoat of silicon carbide particles in a copper matrix so as to produce a layer having a thickness in the range 0.64 - 0.76mm (0.025 - 0.030 inches) with a silicon carbide content of about 15% by weight. This overcoat was applied by high-velocity flame spraying using a wire feed with a Metco 10E spray gun generally as above described for the flame-spraying of the primer coat.

Following coating with the silicon carbide-containing layer the brake disc was then subjected to hot isostatic pressing with directly applied gas pressure at a temperature within the range 450 to 590°C (typically 520°C) at a pressure in the range 70 to 140 MPa (typically 105 MPa) for a duration of 100 to 200 minutes (typically 180 minutes).

Under these conditions the cupronickel primer coat forms a diffusion bond both with the substrate aluminium alloy and with the overcoat copper matrix and residual porosity in both layers is substantially eliminated so that in effect both layers become densified and integrated with the respective working surfaces of the substrate disc.

The temperature and duration combination chosen for the isostatic pressing step is also appropriate to the desired heat treatment of the H15 alloy to develop the required strength in the final product. Typically the required heat treatment is concluded by terminating the isostatic pressing step by controlled cooling at the rate of 40 - 50°C/min, followed by ageing at 165°C for eight hours and air cooling to ambient.

Brake discs fabricated by the foregoing method have been repeatedly tested under track conditions and have been found to have extremely high braking efficiency with a performance equal to the most advanced ventilated steel disc brake available for the same application; low brake fade characteristics with no distortion of the disc during operation; minimal wear of the copper/silicon carbide wear resistant working surfaces; and no spalling of the coating from the substrate.

The features disclosed in the foregoing description and in the following claims may, both separately and in any combination thereof, be material for realising the invention in diverse forms thereof.